# EUROPEAN PATENT APPLICATION

(11) **EP 1 056 031 A1**
(43) Date of publication of application: **29.11.2000**
(21) Application number: 99109241.2
(22) Date of filing: 25.05.1999
(51) Int. Cl.: G06F 17/60

(54) **Method and apparatus for providing content-dynamic information**

(71) Applicant: CYDOOR TECHNOLOGIES LTD., Herzliya 46733 (IL)
(72) Inventor: Zohar, Meir, Hofit 40295 (IL)
(74) Representative: Modiano, Guido, Dr.-Ing.

(57) **Abstract**

An information brokering system which includes information request apparatus 20, an information agent 22 in communication with the information request apparatus 20, and information providing apparatus 24 in communication with the information agent 22. The information request apparatus 20 is operative to directly invoke a first function of the information agent 22 thereby causing the information agent 22 to request at least one information unit 32 from the information providing apparatus 24. The information providing apparatus 24 is operative to select the information unit(s) 32 from a predefined set 30 of information units and provide the information unit(s) 32 to the information agent 22.

## Description

### FIELD OF THE INVENTION

The present invention relates to computer-based information systems in general, and in particular to apparatus and methods for providing content-dynamic information within the context of computer software applications.

### BACKGROUND OF THE INVENTION

Methods of providing content-dynamic information via computer terminals are known in the art. One such method involves providing advertising to computer users connected via computer terminals to the Internet network. Generally, a computer user connected to the Internet runs "browser" software specially designed to retrieve and present "web pages" and other media to the user. Such media often incorporates advertising banners and news headline that may be content-dynamic in that they periodically change. The primary disadvantage of existing methods is that they do not provide such media within the context of non-browser software applications.

### SUMMARY OF THE INVENTION

The present invention seeks to provide novel apparatus and methods for providing content-dynamic information within the context of computer software applications.

There is thus provided in accordance with a preferred embodiment of the present invention an information brokering system including information request apparatus, an information agent in communication with the information request apparatus, information providing apparatus in communication with the information agent the information request apparatus is operative to directly invoke a first function of the information agent thereby causing the information agent to request at least one information unit from the information providing apparatus, and the information providing apparatus is operative to select the at least one information unit from a predefined set of information units and provide the at least one information unit to the information agent.

Further in accordance with a preferred embodiment of the present invention the information agent applies the at least one information unit.

Still further in accordance with a preferred embodiment of the present invention the information agent applies the at least one information unit in connection with the invoking of the first function.

Additionally in accordance with a preferred embodiment of the present invention the information request apparatus is additionally operative to directly invoke a second function of the information agent thereby causing the information agent to apply the at least one information unit.

Moreover in accordance with a preferred embodiment of the present invention the information request apparatus additionally includes an output interface, and the information agent applies the at least one information unit via the output interface.

Further in accordance with a preferred embodiment of the present invention the information providing apparatus provides a plurality of information units and sequencing information related to the plurality of information units to the information agent.

Still further in accordance with a preferred embodiment of the present invention the information agent applies any of the plurality of information units in a manner based at least in part upon the sequencing information

Additionally in accordance with a preferred embodiment of the present invention the information providing apparatus is additionally operative to provide operating instructions to the information agent.

Moreover in accordance with a preferred embodiment of the present invention the information providing apparatus is operative to provide the operating instructions to the information agent in accordance with a performance characteristic of the information agent.

Further in accordance with a preferred embodiment of the present invention the information agent is additionally operative to provide the information providing apparatus with a profile, and the information providing apparatus is additionally operative to select the at least one information unit from a predefined set of information units in accordance with the profile.

Still further in accordance with a preferred embodiment of the present invention the information providing apparatus is additionally operative to provide instructions to the information agent in accordance with the profile.

Additionally in accordance with a preferred embodiment of the present invention the information agent operates in a manner based at least in part upon the instructions.

Moreover in accordance with a preferred embodiment of the present invention the information providing apparatus is additionally operative to provide instructions to the information agent to alter the profile.

Further in accordance with a preferred embodiment of the present invention the profile is a user profile.

Still further in accordance with a preferred embodiment of the present invention the profile is a software profile.

Additionally in accordance with a preferred embodiment of the present invention the profile is a hardware profile.

Moreover in accordance with a preferred embodiment of the present invention the profile is a profile of a currently active software application.

Further in accordance with a preferred embodiment of the present invention the information agent is additionally operative to record user interactions with the information unit and provide the information providing apparatus with the record, and the information providing apparatus is additionally operative to select the at least one information unit from a predefined set of information units in accordance with the record.

Still further in accordance with a preferred embodiment of the present invention the information agent is additionally operative to communicate with an information server.

Additionally in accordance with a preferred embodiment of the present invention the information providing apparatus is additionally operative to instruct the information agent to request information from the information server.

Moreover in accordance with a preferred embodiment of the present invention the information agent provides a registration request to the information providing apparatus, and the information providing apparatus provides registration information to the information agent.

Further in accordance with a preferred embodiment of the present invention the registration information includes an identifier unique to any of a user, the information agent, and the information request apparatus.

Still further in accordance with a preferred embodiment of the present invention the information providing apparatus maintains the registration information.

Additionally in accordance with a preferred embodiment of the present invention the information unit includes any of graphics, sound, animation, text, and executable instructions.

Moreover in accordance with a preferred embodiment of the present invention the information unit is an advertising banner.

Further in accordance with a preferred embodiment of the present invention the at least one information unit includes at least one plurality of information units, each plurality related to an advertising campaign.

Still further in accordance with a preferred embodiment of the present invention the information request apparatus is arranged for integration with a software application.

Additionally in accordance with a preferred embodiment of the present invention the information agent and the information providing apparatus communicate via a computer network.

Moreover in accordance with a preferred embodiment of the present invention the computer network is the Internet.

Further in accordance with a preferred embodiment of the present invention the information providing apparatus is arranged for operation on a network server.

Still further in accordance with a preferred embodiment of the present invention the information providing apparatus includes at least one registration server, at least one communications server, at least one campaign server, and at least one banner server.

There is also provided in accordance with a preferred embodiment of the present invention aninformation brokering method including providing information request apparatus, providing an information agent in communication with the information request apparatus, providing information providing apparatus in communication with the information agent causing the information request apparatus to directly invoke a first function of the information agent thereby causing the information agent to request at least one information unit from the information providing apparatus, and causing the information providing apparatus to select the at least one information unit from a predefined set of information units and provide the at least one information unit to the information agent.

Further in accordance with a preferred embodiment of the present invention the method further includes causing the information agent to apply the at least one information unit.

Still further in accordance with a preferred embodiment of the present invention the information agent applies the at least one information unit in connection with the invoking of the first function.

Additionally in accordance with a preferred embodiment of the present invention the information request apparatus directly invokes a second function of the information agent thereby causing the information agent to apply the at least one information unit.

Moreover in accordance with a preferred embodiment of the present invention the method further includes causing the information agent to apply the at least one information unit via an output interface.

Further in accordance with a preferred embodiment of the present invention the method further includes causing the information providing apparatus to provide a plurality of information units and sequencing information related to the plurality of information units to the information agent.

Still further in accordance with a preferred embodiment of the present invention the method further includes causing the information agent to apply any of the plurality of information units in a manner based at least in part upon the sequencing information.

Additionally in accordance with a preferred embodiment of the present invention the method further includes causing the information providing apparatus to provide operating instructions to the information agent.

Moreover in accordance with a preferred embodiment of the present invention the information providing apparatus provides the operating instructions to the information agent in accordance with a performance characteristic of the information agent.

Further in accordance with a preferred embodiment of the present invention the method further includes causing the information agent to provide the information providing apparatus with a profile, and causing the information providing apparatus to select the at least one information unit from a predefined set of information units in accordance with the profile.

Still further in accordance with a preferred embodiment of the present invention the information providing apparatus provides instructions to the information agent in accordance with the profile.

Additionally in accordance with a preferred embodiment of the present invention the information agent operates in a manner based at least in part upon the instructions.

Moreover in accordance with a preferred embodiment of the present invention the information providing apparatus provides instructions to the information agent to alter the profile.

Further in accordance with a preferred embodiment of the present invention the method further includes causing the information agent to record user interactions with the information unit and provide the information providing apparatus with the record, and causing the information providing apparatus to select the at least one information unit from a predefined set of information units in accordance with the record.

Still further in accordance with a preferred embodiment of the present invention the information agent communicates with an information server.

Additionally in accordance with a preferred embodiment of the present invention the information providing apparatus instructs the information agent to request information from the information server.

Moreover in accordance with a preferred embodiment of the present invention the method further includes causing the information agent to provide a registration request to the information providing apparatus, and causing the information providing apparatus to provide registration information to the information agent.

Further in accordance with a preferred embodiment of the present invention the registration information includes an identifier unique to any of a user, the information agent, and the information request apparatus.

Still further in accordance with a preferred embodiment of the present invention the information providing apparatus maintains the registration information.

### BRIEF DESCRIPTION OF THE DRAWINGS

The present invention will be understood and appreciated from the following derailed description, taken in conjunction with the drawings in which:
Fig. 1 is a simplified semi-pictorial semi-block diagram illustration of an information brokering system for providing content-dynamic information within the context of computer software applications constructed and operative in accordance with a preferred embodiment of the present invention;
Fig. 2 is a simplified flowchart illustration of a preferred method of operation of the system of Fig. 1 in accordance with a preferred embodiment of the present invention; and
Fig. 3 is a simplified block diagram illustration of one configuration of information agent 22 and information providing apparatus 24 of Fig. 1 constructed and operative in accordance with a preferred embodiment of the present invention.

### DETAILED DESCRIPTION OF PREFERRED EMBODIMENTS

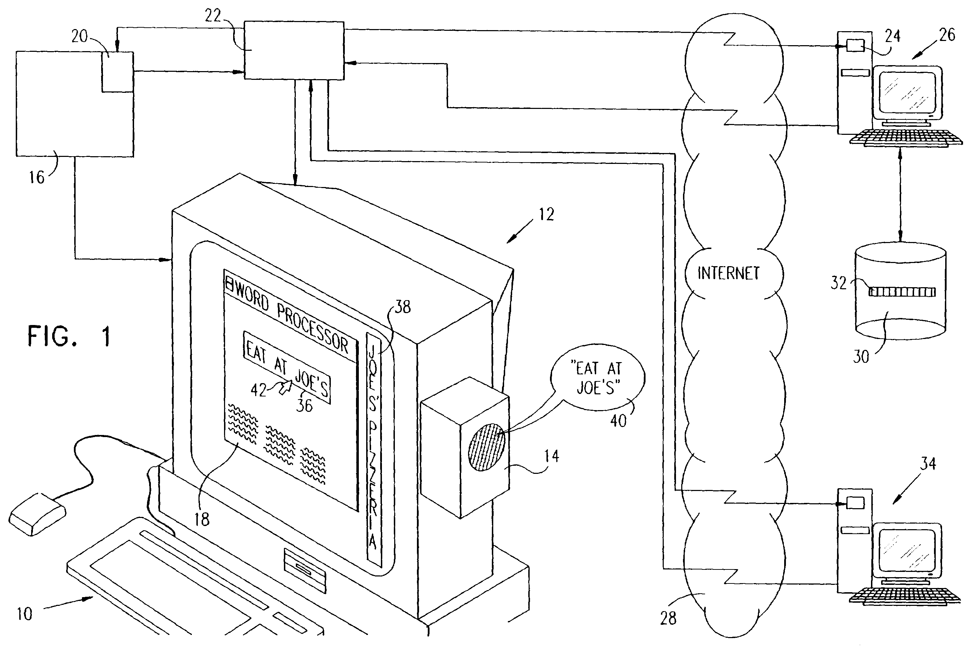

Reference is now made to Fig. 1 which is a simplified semi-pictorial semi-block diagram illustration of an information brokering system for providing content-dynamic information within the context of computer software applications constructed and operative in accordance with a preferred embodiment of the present invention. A computer terminal 10 is provided, typically having various output interfaces such as a display 12 and a speaker 14. Computer 10 is typically capable of running one or more software applications 16, such as a word processor, often having one or more interface elements, such as an application window 18 shown on display 12.

Information request apparatus 20 is provided, preferably embodied as software instructions within application 16 and therefore concurrently executed or "run" with application 16. Information request apparatus 20 may communicate with an information agent 22 which is also preferably embodied as software that may run on computer 10. Information agent 22 may be manually invoked by a user to run, may be invoked automatically when the operating system of computer 10 initializes, or may be invoked by information request apparatus 20.

One or more information providing apparatus 24 are also provided, each preferably embodied as software that may run on a computer, typically being a network sewer 26. Information agent 22 may communicate with information providing apparatus 24, typically via a computer network 28, such as the Internet. Information providing apparatus 24 preferably includes one or more predefined sets of information 30, with each set 30 being made up of one or more information units 32. Each information unit 32 may be graphical, sound, animation, text, executable instructions, or any other known software or data element or combination.

Information agent 22 may also communicate with an information server 34 which is typically a known web sewer or ad server. Communication between information agent 22 and information server 34 is also typically over network Information providing apparatus 24 typically provides instructions to information agent 22 telling it when, whether, and how to communicate with information server 34 and for what purpose.

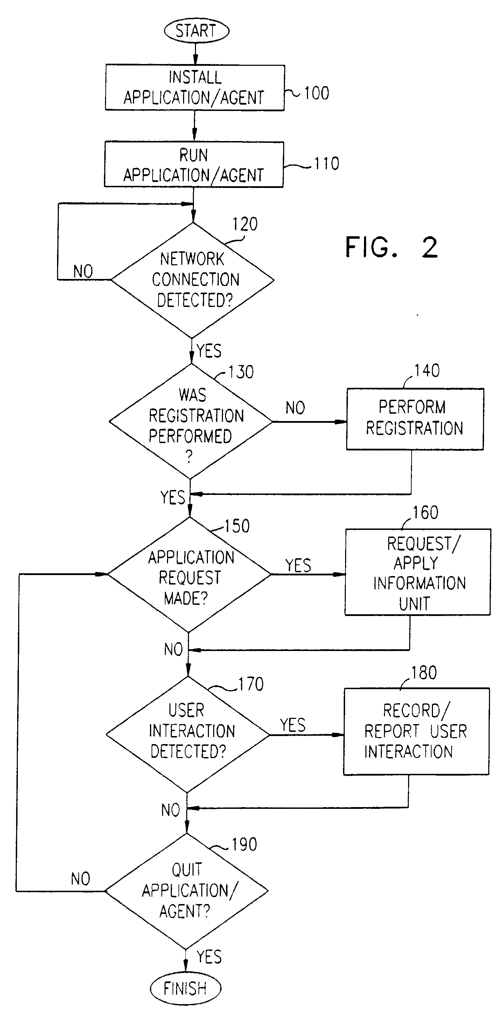

Additional reference is now made to Fig. 2 which is a simplified flowchart illustration of a preferred method of operation of the system of Fig. 1 in accordance with a preferred embodiment of the present invention. In the method of Fig. 2 application 16 and information agent 22 are installed on computer 10 (step 100). It is appreciated that the installation of application 16 and information agent 22 may be performed separately or that information agent 22 may be installed concurrent with the installation of application 16. During the installation process user, software, and hardware information is preferably recorded as one or more "profiles." User profile information may include information such as a user's name, age, and profession. Hardware profile information may include information such as the computer 10's CPU type and computer brand. Software profile information may include information such as what applications are installed on computer 10.

It is appreciated that application 16 and/or information agent 22 may update any profile information subsequent to the installation process. For example, application 16 and/or information agent 22 may track what application is currently being used, the time a user spends using an application and may track the nature of the use, such as what application functions were accessed.

In step 110 application 16 and information agent 22 are run, with information agent 22 being invoked as described hereinabove. Information agent 22 checks if computer 10 is connected to network 28 (step 120). If a connection to network 28 is detected information agent 22 checks if registration was previously performed with information providing apparatus 24 (step 130) and, if not, performs registration (step 140). During registration information agent 22 typically sends profile information to information providing apparatus 24 where the profile information is maintained. Information providing apparatus 24 then preferably sends an identifier, typically unique, to information agent 22 which may be used by information agent 22 in subsequent communications with information providing apparatus 24 to identify the agent, computer 10, and/or user. Information providing apparatus 24 may also derive or receive the network address of computer 10, typically an IP address, using known techniques, and provide profile information to information agent 22 in accordance with the geographic location and/or service provider indicated by the network address where such where the geographic location and/or service provider may be determined from the network address. Information providing apparatus 24 may also provide operating instructions to information agent 22 not previously configured with information agent 22.

It is a particular feature of the invention for information request apparatus 20 to send one or more requests to information agent 22 from within the context of application 16 (step 150). A request may be for one or more information units 32, such as an advertising banner, to be provided. A request may alternatively or additionally indicate to information agent 22 how a received information unit 32 should be applied, where "applied" as used herein with reference to information unit 32 refers to the manner in which the information unit is presented or otherwise executed.

Information agent 22, having received a request from information request apparatus 20, typically sends the request to information providing apparatus 24 (step 160). Information providing apparatus 24 typically responds to a received request by selecting one or more information units 32 and sending them to information agent 22. Typically, information providing apparatus 24 initially instructs information agent 22 that information units 32 are ready to be sent and that information agent 22 should request that the units 32. Subsequently, information agent 22 requests that the units 32 be sent, at which point information agent 22 receives and stores the units 32 for use. The selection is performed using predefined logic that is preferably based at least in part on the profile information received from information agent 22. For example, if a user profile indicates the user is an 18-year-old, information providing apparatus 24 may select information units 32 in the form of advertising banners previously targeted toward 18-year-olds. Information providing apparatus 24 may also provide sequencing or other information to information agent 22 regarding the manner in which the information units 32 it has sent should be applied. Sequencing of several information units 32, each typically containing a unique advertising banner, may be used to provide a content-dynamic effect with the banner periodically changing. It is appreciated that information providing apparatus may maintain groups of related information units 32, such as advertising banners in an advertising campaign.

After receiving an information unit 32 information agent 22 may apply the unit 32. Information agent 22 may apply an information in accordance with preprogrammed logic, instructions provided by information providing apparatus 24, instructions provided by information request apparatus 20, or as a function of any combination of these. Information agent 22 may apply information unit 32 within the context of application window 18, such as banner 36, outside of the application window 18, such as banner 38, via speaker 14, as shown at 40, or in any known manner of output or presentation via computer. Where information unit 32 comprises executable instructions, information agent 22 may apply the information unit by running it. It is appreciated that information unit 32 may comprise executable instructions for applying one or more other information units 32.

Information agent 22 is preferably capable of detecting user interactions with information units 32 that have been applied (step 170). For example, information agent 22 may detect when a user clicks on banner 36 with a mouse pointer 42. Information agent 22 then records the interaction event and provides it to information providing apparatus 24 (step 180), typically for use during the selection of information units 32.

Information agent 22 may terminate when application 16 terminates, may terminate upon instruction from application 16, or may alternatively remain active as long as the operating system of computer 10 is in operation (step 190).

At any time when information providing apparatus 24 is in communication with information agent 22, information providing apparatus 24 may instruct information agent 22 to establish communication with another information providing apparatus 24 or, alternatively, with information server 34. These instructions may include how information agent 22 should communicate with information server 34, such as what communications protocol to use, when communications should begin and end, and for what purpose, such as for retrieving advertising banners. The instructions may also be based on profile information sent to information providing apparatus 24 as described hereinabove.

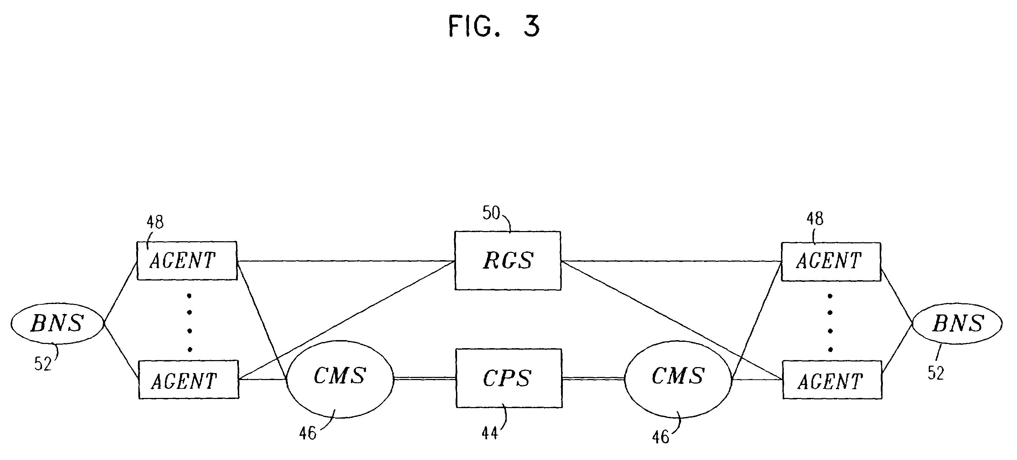

Reference is now made to Fig. 3 which is a simplified block diagram illustration of one configuration of information agent 22 and information providing apparatus 24 of Fig. 1 constructed and operative in accordance with a preferred embodiment of the present invention. In the embodiment shown a campaign server (CPS) 44 is provided in communication with one or more communications servers (CMS) 46. Communications servers 46 are provided for communication with one or more information agents 48, being functionally equivalent to information agent 22 (Fig. 1). A registration server (RGS) 50 is also provided for communication with information agents 48. One or more banner servers (BNS) 52 are also provided for communication with information agents 48. Campaign server 44, communications server 46, registration server 50, and bannerserver 52 are collectively functionally equivalent to information providing apparatus 24 of Fig. 1.

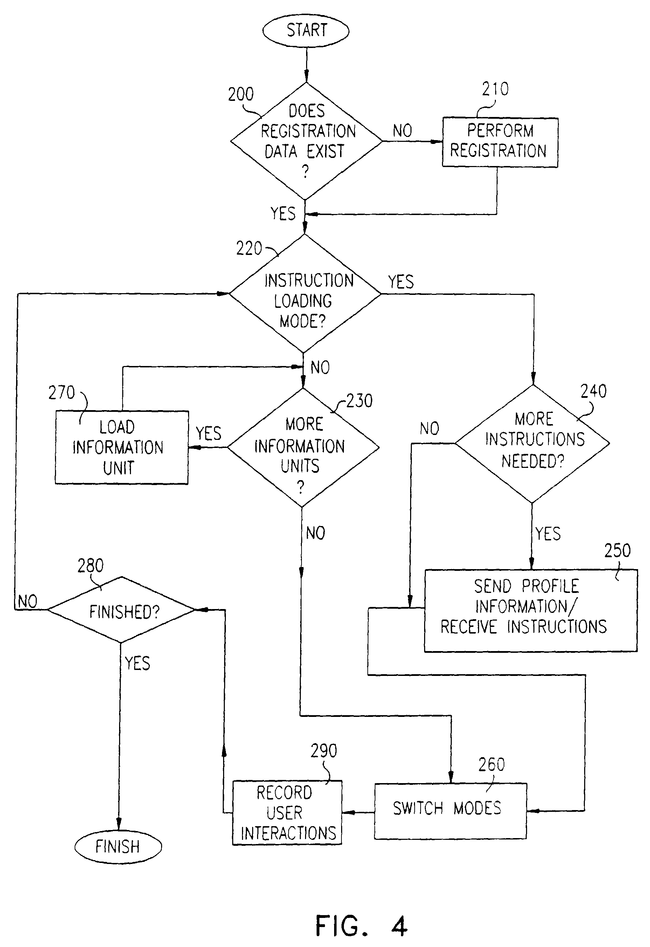

Additional reference is now made to Fig. 4 which is a simplified flowchart illustration of a preferred method of operation of the system of Fig. 3 in accordance with a preferred embodiment of the present invention. In the method of Fig. 4 information agent 48 checks if registration was previously performed by looking for registration information that it might be maintaining (step 200). If registration was not performed information agent 48 contacts registration server 50, provides server 50 with profile information, and receives operating instructions from server 50 (step 210). The operating instructions may include a unique identification, instructions to modify the user, application, computer, or other profile information, and instructions to modify the configuration of information agent 48 itself.

Information agent 48 typically operates in one of two modes: instruction loading mode and information unit loading mode. When information agent 48 concludes operation in instruction loading mode it preferably reverts to information unit loading mode, and vice versa. In step 220 information agent 48 checks which mode it is in. If it is in instruction loading mode, information agent 48 checks if more instructions need to be retrieved (step 240), such as when the number of information units 32 that information agent 48 was instructed to retrieve and apply equals or approaches the number of information units actually applied, If so, information agent 48 sends profile information to communications server 46 and receives operating instructions from it (step 250) Information agent 48 may then perform the instructions and prepare to retrieve information units 32 If after step 240 no information units 32 needs to be retrieved processing continues with step 260 where information agent 48 switched from one mode to the next.

If after step 220 information agent 48 is in information unit loading mode, it checks to see if any more information units 32 need to be loaded according to previously received operating instructions (step 230). If so, another information unit 32 is retrieved from banner server 52 (step 270) and processing continues with step 230. If not, processing continues with step 260.

At step 290 information agent 48 checks for user interactions as described hereinabove with reference to Fig. 2. Information agent 48 continues operation with step 220 or terminates execution also as described hereinabove (step 280).

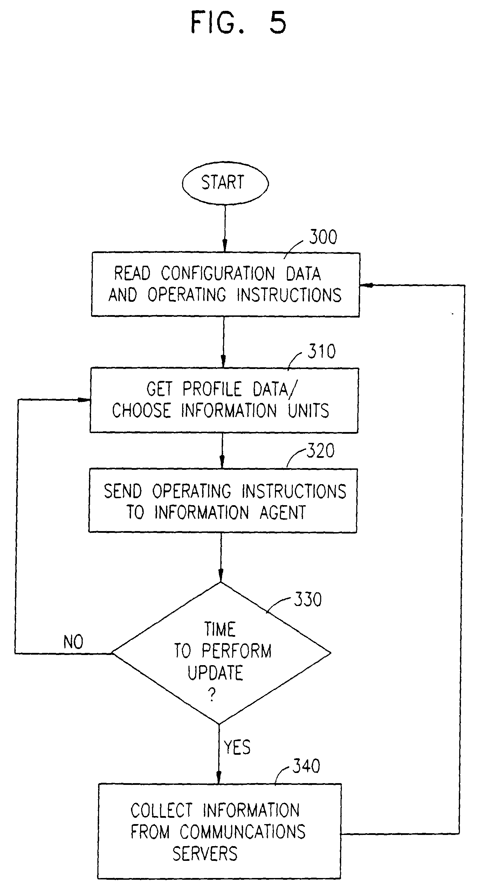

Additional reference is now made to Fig. 5 which is a simplified flowchart illustration of a preferred method of operation of campaign server 44 of Fig. 3 in accordance with a preferred embodiment of the present invention. In the method of Fig. 5 communications servers 46 read configuration data and operating instructions to be provided to information agents 48 from campaign server 44 (step 300). When profile information is received from information agent 48, communications server 46 chooses information units 32 and operating instructions for information agent 48 (step 310), both in accordance with operations performed upon the profile information according to instructions provided by campaign server 44, and sends the information units and operating instructions to information agent 48 (step 320).

Campaign server 44 may periodically update communications servers 46 with instructions for information agents 48, profile information, campaign information, and sequence information for information units 32 according to preprogrammed update criteria (step 330). Also periodically, campaign server 44 may collect information provided by information agents 48 to communications servers 46 (step 340) and may use the information to determine what future instructions and reporting information should be sent to communications servers 46 for information agents 48. Processing after step 340 then continues with step 300.

It is appreciated that the steps of Figs. 2, 4, and 5 need not necessarily be performed in the order shown, and that in fact different implementations of the steps of Figs. 2, 4, and 5 may be employed to yield similar overall results.

It is appreciated that any of the software components of the present invention may, if desired, be implemented in ROM (read-only memory) form. The software components may, generally, be implemented in hardware, if desired, using conventional techniques.

It is appreciated that the particular embodiment described is intended only to provide an extremely detailed disclosure of the present invention and is not intended to be limiting.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited to what has been particularly shown and described hereinabove. Rather, the scope of the present invention is defined only by the claims that follow.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An information brokering system comprising;
information request apparatus (20);
an information agent (22) in communication with said information request apparatus (20);
information providing apparatus (24) in communication with said information agent (22) wherein:
said information request apparatus (20) is operative to directly invoke a first function of said information agent (22) thereby causing said information agent (22) to request at least one information unit (32) from said information providing apparatus (24); and
said information providing apparatus (24) is operative to select said at least one information unit (32) from a predefined set (30) of information units and provide said at least one information unit (32) to said information agent (22).

2. An information brokering system according to claim 1 wherein said information agent (22) applies said at least one information unit (32).

3. An information brokering system according to claim 2 wherein said information agent (22) applies said at least one information unit (32) in connection with said invoking of said first function; or
wherein said information request apparatus (20) is additionally operative to directly invoke a second function of said information agent (22) thereby causing said information agent (22) to apply said at least one information unit (32).

4. An information brokering system according to any of the preceding claims wherein: said information request apparatus (20) additionally comprises an output interface (12, 14); and said information agent (22) applies said at least one information unit (32) via said output interface (12, 14); and/or
wherein said information providing apparatus (24) provides a plurality of information units (32) and sequencing information related to said plurality of information units (32) to said information agent (22).

5. An information brokering system according to claim 4, second alternative, wherein said information agent (22) applies any of said plurality of information units (32) in a manner based at least in part upon said sequencing information.

6. An information brokering system according to any of the preceding claims wherein said information providing apparatus (24) is additionally operative to provide operating instructions to said information agent (22).

7. An information brokering system according to claim 6 wherein said information providing apparatus (24) is operative to provide said operating instructions to said information agent (22) in accordance with a performance characteristic of said information agent (22).

8. An information brokering system according to any of the preceding claims wherein:
said information agent (22) is additionally operative to provide said information providing apparatus (24) with a profile; and
said information providing apparatus (24) is additionally operative to select said at least one information unit (32) from a predefined set (30) of information units in accordance with said profile.

9. An information brokering system according to claim 8 wherein said information providing apparatus (24) is additionally operative to provide instructions to said information agent (22) in accordance with said profile; or
wherein said information providing apparatus (24) is additionally operative to provide instructions to said information agent (22) to alter said profile.

10. An information brokering system according to claim 9, first alternative, wherein said information agent (22) operates in a manner based at least in part upon said instructions.

11. An information brokering system according to any of claims 8-10 wherein said profile is a user profile; or
wherein said profile is a software profile; or
wherein said profile is a hardware profile; or
wherein said profile is a profile of a currently active software application.

12. An information brokering system according to any of the preceding claims wherein: said information agent (22) is additionally operative to record user interactions with said information unit (32) and provide said information providing apparatus (24) with said record; and said information providing apparatus (24) is additionally operative to select said at least one information unit (32) from a predefined set (30) of information units in accordance with said record; or
wherein said information agent (22) is additionally operative to communicate with an information server (34).

13. An information brokering system according to claim 12, second alternative, wherein said information providing apparatus (24) is additionally operative to instruct said information agent (29) to request information from said information server (34).

14. An information brokering system according to any of the preceding claims wherein:
said information agent (22) provides a registration request to said information providing apparatus (24); and
said information providing apparatus (24) provides registration information to said information agent (22).

15. An information brokering system according to claim 14 wherein said registration information comprises an identifier unique to any of a user, said information agent (22), and said information request apparatus (20); or
wherein said information providing apparatus (24) maintains said registration information.

16. An information brokering system according to any of the preceding claims wherein said information unit (32) comprises any of graphics, sound, animation, text, and executable instructions, wherein said information unit (32) is preferably an advertising banner; or
wherein said at least one information unit (32) comprises at least one plurality of information units (32), each plurality related to an advertising campaign.

17. An information brokering system according to any of the preceding claims wherein said information request apparatus (20) is arranged for integration with a software application (16); or
wherein said information agent (22) and said information providing apparatus (24) communicate via a computer network (28); or
wherein said information providing apparatus (24) comprises at least one registration server (50), at least one communications server (46), at least one campaign server (44), and at least one banner server (52).

18. An information brokering system according to claim 17 wherein said computer network (28) is the Internet; and/or
wherein said information providing apparatus (24) is arranged for operation on a network server (26).

19. An information brokering method comprising:
providing information request apparatus (20);
providing an information agent (22) in communication with said information request apparatus (20);
providing information providing apparatus (24) in communication with said information agent (22);
causing said information request apparatus (20) to directly invoke a first function of said information agent (22) thereby causing said information agent (22) to request at least one information unit (32) from said information providing apparatus (24); and
causing said information providing apparatus (24) to select said at least one information unit (32) from a predefined set (30) of information units and provide said at least one information unit (32) to said information agent (22).

20. An information brokering method according to claim 19 and further comprising causing said information agent (22) to apply said at least one information unit (32).

21. An information brokering method according to claim 20 wherein said information agent (22) applies said at least one information unit (32) in connection with said invoking of said first function; or
wherein said information request apparatus (20) directly invokes a second function of said information agent (22) thereby causing said information agent (22) to apply said at least one information unit (32).

22. An information brokering method according to any of claims 19-21 and further comprising causing said information agent (22) to apply said at least one information unit (32) via an output interface (12, 14).

23. An information brokering method according to any of claims 19-22 and further comprising causing said information providing apparatus (24) to provide a plurality of information units (32) and sequencing information related to said plurality of information units (32) to said information agent (22).

24. An information brokering method according to claim 23 and further comprising causing said information agent (22) to apply any of said plurality of information units (32) in a manner based at least in part upon said sequencing information.

25. An information brokering method according to any of claims 19-24 and further comprising causing said information providing apparatus (24) to provide operating instructions to said information agent (22).

26. An information brokering method according to claim 25 wherein said information providing apparatus (24) provides said operating instructions to said information agent (22) in accordance with a performance characteristic of said information agent (22).

27. An information brokering method according to any of claims 19-26 and further comprising:
causing said information agent (22) to provide said information providing apparatus (24) with a profile; and
causing said information apparatus to select said at least one information unit (32) from a predefined set (30) of information units in accordance with said profile.

28. An information brokering method according to claim 27 wherein said information providing apparatus (24) provides instructions to said information agent (22) in accordance with said profile, said information agent (22) preferably operating in a manner based at least in part upon said instruction; or
wherein said information providing apparatus (24) provides instructions to said information agent (22) to alter said profile.

29. An information brokering method according to any of claims 19-28 and further comprising:
causing said information agent (22) to record user interactions with said information unit (32) and provide said information providing apparatus (24) with said record; and
causing said information providing apparatus (24) to select said at least one information unit (32) from a predefined set (30) of information units in accordance with said record.

30. An information brokering method according to any of claims 19-29 wherein said information agent (22) communicates with an information server (34), said information providing apparatus (24) preferably instructing said information agent (22) to request information from said information server (34).

31. An information brokering method according to any of claims 19-30 and further comprising:
causing said information agent (22) to provide a registration request to said information providing apparatus (24); and
causing said information providing apparatus (24) to provide registration information to said information agent (22).

32. An information brokering method according to claim 31 wherein said registration information comprises an identifier unique to any of a user, said information agent (22), and said information request apparatus (20); or
wherein said information providing apparatus (24) maintains said registration information.
